(19) Europäisches Patentamt
European Patent Office
Office européen des brevets

(11) EP 0 915 934 B1

(12) EUROPÄISCHE PATENTSCHRIFT

(45) Veröffentlichungstag und Bekanntmachung des Hinweises auf die Patenterteilung:
**24.05.2000 Patentblatt 2000/21**

(21) Anmeldenummer: **97918937.0**

(22) Anmeldetag: **21.07.1997**

(51) Int Cl.⁷: **C08L 77/00**, C08K 7/00, C08K 3/34, C08J 5/18

(86) Internationale Anmeldenummer:
**PCT/EP97/03900**

(87) Internationale Veröffentlichungsnummer:
**WO 98/05716 (12.02.1998 Gazette 1998/06)**

(54) **FESTSTOFFHALTIGE POLYAMIDFOLIEN**

SOLID-CONTAINING POLYAMIDE FOILS

FILMS DE POLYAMIDE CONTENANT DES SOLIDES

(84) Benannte Vertragsstaaten:
**AT BE DE DK FI FR GB NL**

(30) Priorität: **02.08.1996 DE 19631348**

(43) Veröffentlichungstag der Anmeldung:
**19.05.1999 Patentblatt 1999/20**

(73) Patentinhaber: **BASF AKTIENGESELLSCHAFT**
**67056 Ludwigshafen (DE)**

(72) Erfinder:
- **GÖTZ, Walter**
**D-67067 Ludwigshafen (DE)**
- **GLÜCK, Alexander**
**D-67251 Freinsheim (DE)**
- **HERCHENBACH, Jochen**
**D-53474 Bad Neuenahr-Ahrweiler (DE)**

(56) Entgegenhaltungen:
**EP-A- 0 309 095** **WO-A-93/01108**
**US-A- 4 412 103**

- **DATABASE WPI Section Ch, Week 8704 Derwent Publications Ltd., London, GB; Class A18, AN 87-025230 XP002049829 & JP 61 281 401 A (SUMITOMO BAKELITE CO) , 11.Dezember 1986**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 915 934 B1

Printed by Jouve, 75001 PARIS (FR)

## Beschreibung

Die Erfindung betrifft Mono- oder biaxial orientierte Folien mit einem Rückschrumpfwert nach der Thermofixierung von 5 bis 30 %, bestehend aus

A) bis zu 99 Gew.-% Polycaprolactam oder einem Copolyamid 6/66 oder deren Mischungen, welche bis zu 25 Gew.-% teilaromatische und/oder amorphe Polyamide enthalten können,

B) 0,1 bis 2,5 Gew.-% eines mineralisches Füllstoffes mit einem Länge/Durchmesser (L/D)-Verhältnis von 1:5 bis 1:100

C) 0 bis 30 Gew.-% weiterer Zusatzstoffe und Verarbeitungshilfsmittel,

wobei die Summe der Gewichtsprozente der Komponenten A) bis C) jeweils 100 % ergibt.

Weiterhin betrifft die Erfindung Verfahren zur Herstellung der erfindungsgemäßen Folien sowie biaxial oder monoaxial orientierte Folien erhältlich gemäß den erfindungsgemäßen Verfahren. Darüberhinaus betrifft die Erfindung die Verwendung der erfindungsgemäßen Folien, insbesondere für Verpackungsanwendungen und zur Herstellung von Mehrschichtfolien sowie die hier bei erhältlichen Mehrschichtfolien.

Polyamide, welche mineralische Füllstoffe enthalten, sind bekannt. Derartige Formmassen eignen sich für Spritzgußanwendungen, wobei bis zu 50 % Füllstoff in der Polymermatrix enthalten sein können. Die Pa-Matrix weist ein für Spritzgußanwendungen übliches Molekulargewicht auf, wobei Viskositätszahlen (VZ) von 100 bis 170 ml/g üblich sind.

Polyamidfolien sowohl unorientiert als auch mono- oder biaxial orientierter Art und ihre Anwendungen sind bekannt; z.B. aus DE-A 28 50 182, DE-A 28 50 181 und DE-A 34 26 723. Diesen Folien können Feststoffe wie Pigmente (z.B. $TiO_2$), Nukleierungsmittel (Talkum, Aluminiumoxid) oder Antiblockmittel (Siliziumdioxid, Zeolith, Calciumcarbonat) enthalten. Dabei handelt es sich in der Regel um kugel- bis quaderförmige Feststoffe, die in Mengen bis zu 0,1 Gew.-% zugesetzt werden (siehe JP-A 08/73734).

Aus der DE-A 41 41 292 sind biaxial orientierte Folien aus einer Mischung aus aliphatischem und aromatischen Polyamid mit modifiziertem Polyolefin und einem Pigment bekannt, wobei $TiO_2$ mit einer Partikelgröße von 0,01-15 $\mu$m eingesetzt wird.

Polyamidfolien (unorientiert oder biaxial orientiert) werden häufig zur Verpackung von Lebensmitteln als Barrierefolie eingesetzt. Polyamid wirkt dabei als Barrieremedium vor allem gegen den Zutritt von Sauerstoff zum verpackten Lebensmittel, während die Sperrwirkung gegen den Austritt von Wasser aus dem Lebensmittel (Austrocknung) geringer ist. Zur Verbesserung der $H_2O$-Sperrwirkung wird Coextrusion mit Polyolefinen, zur noch weiteren Erhöhung der $O_2$-Sperrwirkung wird Coextrusion mit EVOH angewandt. Coextrusion ist allerdings ein aufwendiges Verfahren, da unter Berücksichtigung der notwendigen Haftvermittler-Lagen mindestens 3 Extruder für die verschiedenen Komponenten sowie ein aufwendiger Mehrschicht-Extrusionskopf notwendig ist.

Als Beispiel für coextrudierte Folien sei JP-A 63/283836 genannt.

Ein weiteres Mittel zur Verbesserung der Sperrwirkung von Polyamiden ist die Zumischung von teilaromatischen amorphen Polyamiden des Typs PA 6I/6T oder PA MXD6 zu Standard-Polyamiden (vor allem zu PA6). Dabei sind Zusatz-Mengen in der Größenordnung von 10-40 % notwendig. Dies ist nicht nur aufgrund des hohen Preises, sondern auch aufgrund der damit stark veränderten mechanischen und optischen Eigenschaften sowie der verschlechteren Verarbeitbarkeit der Polyamide von Nachteil (s. EP-A 358 038).

Biaxialorientierte Schlauchfolien werden insbesondere in der Wurstindustrie verwendet. Dabei wird die Rohwurst(Brät) in Schlauchfolienabschnitte gefüllt, an beiden Enden verschlossen und gekocht. Durch den für biaxial orientierte Folien typischen Kochschrumpf wird eine prall gefüllte, runde Wurst erhalten. Die Folie dient hier sowohl als Herstellungs-Hilfsmittel als auch als Verkaufsverpackung bis zum Aufschneiden, so daß zur verbesserten Haltbarkeit des Inhalts eine niedrige Permeation gefordert ist.

Eine weitere Forderung besteht in einem - neben verbesserten Permeationswerten - verbesserten Verarbeitungsverhalten bei der Herstellung von Blasfolien, vor allem biaxial verstreckten Blasfolien. Ferner ist eine hohe Durchmesserkonstanz (Kalibergenauigkeit) vor allem für die Herstellung industriell vorgeschnittener und verpackter Wurstwaren wesentlich, da der Hersteller zur Einhaltung des Mindestfüllgewichtes bei Durchmesserschwankungen eine sog. Übermenge verpacken muß.

Der vorliegenden Erfindung lag daher die Aufgabe zugrunde, Polyamidfolien sowie Verfahren zu ihrer Herstellung zur Verfügung zu stellen, wobei die Folien eine gute Sauerstoff- und Wasserpermation und bei der Verarbeitung eine gute Kalibergenauigkeit aufweisen sollen.

Diese Aufgabe wurde die eingangs definierten Polyamidfolien gelöst.

Bevorzugte Ausführungsformen sowie Verfahren zur Herstellung der Folien und deren Verwendung sind den

Unteransprüchen zu entnehmen.

Überraschenderweise wurde gefunden, daß durch Zugabe von größeren Mengen eines mineralischen Feststoffes, insbesondere plättchenförmiger Schichtsilikate, mit bestimmtem Längen/Durchmesser (L/D) Verhältnis sowohl die Sauerstoff- als auch die Wasserbarriereeigenschaften der Monofolien verbessert werden.

Insbesondere konnte überraschenderweise durch den Zusatz dieser mineralischen Feststoffe die Kalibergenauigkeit bei der Herstellung von mono- oder biaxial orientierten Folien verbessert werden und ein Polyamid mit niedrigerem Molekulargewicht eingesetzt werden.

Die Komponente A) besteht bei den erfindungsgemäßen Folien aus bis zu 99, bevorzugt 67 bis 99, insbesondere 80 bis 99 und ganz besonders 85 bis 98 Gew.-% Polycaprolactam oder einem Copolyamid 6/66 oder deren Mischungen, welche bis zu 25 Gew.-% teilaromatische und/oder amorphe Polyamide enthalten können. Selbstverständlich können auch Mischungen der nachstehenden Polyamide in den erfindungsgemäßen Folien eingesetzt werden.

Die Polyamide der erfindungsgemäßen Folien weisen im allgemeinen eine Viskositätszahl von 150 bis 300 ml/g, vorzugsweise von 170 bis 250 und insbesondere von 185 bis 225 ml/g auf, bestimmt an einer 0,5 gew.-%igen Lösung in 96 gew.-%iger Schwefelsäure bei 25°C gemäß ISO 307.

Halbkristalline oder amorphe Harze, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 4 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl) -methan, 2,2-Di-(4-aminophenyl)-propan oder 2,2-Di-(4-aminocyclohexyl)-propan.

Bevorzugte Polyamide sind Polycaprolactam und Copolyamide 6/66 sowie Copolyamide aus Caprolactam und Terepthalsäure/Isophthalsäure (z.B. PA 6/6T, PA 6/6I).

Insbesondere bevorzugt sind Copolyamide 6/66, wobei der Anteil an Caprolactam-Monomeren vorzugsweise 80 bis 95 Gew.-% bezogen auf das Copolyamid beträgt.

Weiterhin bevorzugt sind Mischungen der vorstehenden Polyamide, wobei insbesondere bis zu 25 Gew.-% aus teilaromatischen und/oder amorphen Polyamiden wie PA6I oder PA6/6T bestehen können.

Die Komponente B) besteht bei den erfindungsgemäßen Polyamidfolien aus einem mineralischen Füllstoff mit einem Länge/Durchmesserverhältnis (L/D) von 1:5 bis 1:100, welcher in Mengen von 0,1 bis 15, vorzugsweise 0,2 bis 10, insbesondere 0,5 bis 5 und ganz besonders 1 bis 2,5 Gew.-%, bezogen auf A) bis C) enthalten ist.

Das L/D-Verhältnis beträgt vorzugsweise 1:10 bis 1:40 und insbesondere 1:15 bis 1:25. Das L/D Verhältnis kann durch Rasterelektronenmikroskopische Aufnahmen bestimmt werden, wobei von mindestens 50 Füllstoffteilchen Länge und Durchmesser ermittelt wird.

Der mittlere Durchmesser des mineralischen Feststoffes beträgt vorzugsweise 0,1 bis 50 µm, insbesondere 1 bis 20 µm.

Bevorzugte mineralische Feststoffe sind blättchenförmige Schichtsilikate, wobei Glimmer (Kaliumaluminiumsilikat) besonders bevorzugt eingesetzt wird.

Sind $SiO_4$ Tetraeder zu zweidimensionalen Netzwerken verbunden, so ist die empirische Formel für das Anion $(Si_2O_5^{2\ominus})_n$. Die einzelnen Schichten sind durch die dazwischen liegende Kationen miteinander verbunden. Für nähere Einzelheiten sei auf F.A. Cotton, G. Wilkinson, 3. Aufl. S.333, Verlag Chemie, 1974 verwiesen.

Die erfindungsgemäß eingesetzten, Füllstoffe können mit einem Silan der allgemeinen Formel I

$$(R\text{-}(CH_2)_n)_k Si(O\text{-}C_mH_{2m+1})_{4-k} \qquad \mathrm{I}$$

in der R $NH_2$-,

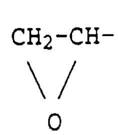

oder HO-, und

m eine ganze Zahl von 1 bis 5,

n eine ganze Zahl von 1 bis 10

k eine ganze Zahl von 1 bis 3 bedeuten,

behandelt sein.

Bevorzugte Silane der allgemeinen Formel I sind nach den bisherigen Beobachtungen solche, in denen R für die Amino- oder die Epoxigruppe steht, und n = 1, 2, 3 oder 4, m = 1 oder 2 und k = 1 bedeuten. Beispielhaft seien genannt: Aminopropyltrimethoxysilan, Aminobutyltrimethoxysilan, Aminopropyltriethoxysilan, Aminobutyltriethoxysilan, 2,3-Epoxipropyltrimethoxysilan, 3,4-Epoxibutyltrimethoxysilan, 2,3-Epoxipropyltriethoxysilan, 3,4-Epoxibutyltriethoxysilan.

Die erfindungsgemäß verwendeten Silane I sind großteils käuflich (s. beispielsweise Degussa Silane, Schriftenreihe Pigmente Nr. 75, Degussa AG) und in an sich bekannter Weise, beispielsweise wie in US 2 930 809 ausführlich beschrieben, herstellbar.

Die Behandlung der erfindungsgemäß eingesetzten Füllstoffe nimmt man in der Regel so vor, daß man zu einer wäßrigen Dispersion des Füllstoffs, die zusätzlich Emulgatoren enthalten kann, das Silan der allgemeinen Formel I, bevorzugt unter Rühren, zusetzt. Hierbei reagieren in der Regel die Alkoxygruppen des Silans I mit den üblicherweise vorhandenen OH-Gruppen an der Oberfläche des Füllstoffes unter Bildung von Si-O-Metall-Bindungen.

Das Silan kann man in einer Menge im Bereich von 0,05 bis 5, i bevorzugt von 0,1 bis 1, besonders bevorzugt von 0,2 bis 0,4 Gew.-%, bezogen auf die Füllstoffmenge, einsetzen.

Neben den wesentlichen Komponenten A) und B) können die Formmassen zur Herstellung der Polyamidfolien weitere Zusatzstoffe und Verarbeitungshilfsmittel C) enthalten. Deren Anteil beträgt in der Regel bis zu 30 Gew.-% vorzugsweise bis zu 10 Gew.-%, bezogen auf das Gesamtgewicht der Komponenten A) bis C).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe, Pigmente, Weichmacher und Flammschutzmittel und für Polyamid geeignete Kautschuke (auch als Schlagzähmodifier oder kautschukelastische Polymerisate bezeichnet).

Oxidationsverzögerer und Wärmestabilisatoren, die den thermoplastischen Massen gemäß der Erfindung zugesetzt werden können, sind Kupfer-(I)-Halogenide, z.B. Chloride, Bromide oder Iodide oder deren Mischungen sowie Mischungen mit Natrium- oder Kaliumhalogeniden oder Komplexe der Kuperhalogenide z.B. als Triphenylkomplexverbindungen. Ferner kann man sterisch gehinderte Phenole, vorzugsweise in Konzentration bis zu 1 Gew.-%, bezogen auf das Gewicht der Mischung, einsetzen.

Gleit- und Entformungsmittel, die man in der Regel bis zu 1 Gew.-% der thermoplastischen Masse zusetzen kann, sind, beispielsweise langkettige Fettsäuren oder deren Derivate wie Stearinsäure, Stearylalkohol, Stearinsäurealkylester und -amide sowie Ester des Pentaerythrits mit langkettigen Fettsäuren. Bevorzugt sind Calciumstearat, Zinkstearat und Ethylen-bis-stearylamid. Als Antiblockmittel seien $SiO_2$, Na $AlSiO_3$ und $CaCO_3$-Partikel genannt

Weiterhin können organische Farbstoffe wie Nigrosin, Pigmente wie Titandioxid, Cadmiumsulfid, Cadmiumselenid, Phthalocyanine, Ultramarinblau und Ruß als Farbstoffe zugesetzt werden.

Als Keimbildungsmittel können Natriumphenylphosphinat, Aluminiumoxid, Siliziumdioxid, Nylon 22 sowie bevorzugt Talkum eingesetzt werden, üblicherweise in Mengen bis zu 1 Gew.-%.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt. Die Mengen betragen üblicherweise bis zu 15 Gew.-%.

Die Herstellung der erfindungsgemäßen Formmassen kann nach an sich bekannten Verfahren erfolgen. Bevorzugt erfolgt die Herstellung durch Zugabe der Komponente B) sowie gegebenenfalls C) zur Schmelze der Komponente A).

Zweckmäßigerweise verwendet man hierzu Extruder, z.B. Einschnecken- oder Zweischneckenextruder oder andere herkömmliche Plastifizierungsvorrichtungen wie Brabender-Mühlen oder Banbury-Mühlen.

Bevorzugt ist die Herstellung eines Batches (Konzentrat) aus A) und B), wobei 5 bis 50, vorzugsweise 15 bis 35 Gew.-% des Füllstoffes B) in eine Polyamidmatrix eingearbeitet werden. Dieses Konzentrat wird üblicherweise anschließend als physikalische Mischung mit Polyamid verdünnt, so daß die eingangs beschriebenen Mengenverhältnisse des Füllstoffes in der Polymermatrix erzielt werden. Die Zusatzstoffe C) können bei dieser Herstellmethode sowohl in den Batch eingearbeitet als auch bei der anschließenden Verdünnung des Konzentrates zur Polymerschmelze zudosiert werden.

Erfindungsgemäß werden die eingangs beschriebenen Polyamidfolien in der Weise hergestellt, daß man aus

den Komponenten A) bis C) mittels üblicher Breitschlitz- oder Blasfolienverfahren eine Folie herstellt. Die Verfestigung der Folie wird üblicherweise so durchgeführt, daß die Folie mittels Walzen oder sonstige geeignete Vorrichtungen durch ein Wasserbad oder temperierten Luftstrom hindurchgeführt wird.

Für die Herstellung von mono- oder biaxial orientierten Folien werden die Primärfolien in üblicher Weise nach der Verfestigung um mindestens das 1,5 fache, vorzugsweise mindestens 2 fache in mindestens einer Richtung gereckt. Dies kann man beispielsweise durch Führung der Folien über Walzen mit unterschiedlicher Drehgeschwindigkeit erreichen. Bei biaxial orientierten Folien recken dabei gleichzeitig seitlich angebrachte Vorrichtungen die Folie in der Breite.

Bei biaxial orientieren Schlauchfolien wird beispielsweise ein Druck von 1 bis 3 bar in den Schlauch gegeben, wobei der Druck sich nach den gewünschten Ausdehnungsmaßen der Folie richtet.

Um eine gute und reproduzierbare Kalibergenauigkeit bei biaxial orientierten Schlauchfolien zu erzielen, ist es jedoch vorteilhaft, die Folien nach der schmelzflüssigen Austragung aus dem Extruder in einer ersten Stufe auf Temperaturen von 0 bis 30°C, vorzugsweise 5 bis 25°C abzukühlen und anschließend in einer zweiten Stufe auf Temperaturen von 50 bis 95°C vorzugsweise 60 bis 90°C zu erwärmen. Die vorstehenden Temperaturparometer ergeben sich aus der jeweiligen Glastemperatur der reinen Komponente A), d.h. zunächst wird bis unterhalb der Glastemperatur abgekühlt und anschließend die Folie auf Temperaturen oberhalb der Glastemperatur erwärmt. Da die Glastemperatur jedoch in Abhängigkeit von Feuchtigkeitsgehalt der Folie schwankt, wendet der Fachmann die obigen Temperaturbereiche an, welche durch routinemäßiges Experimentieren für die jeweilige Folie optimierbar sind.

Nach der Reckung der Folien können diese in heißer Luft (ca. 80 bis 160°C) oder Wasserdampf (60 bis 100°C) thermofixiert werden. Die Folien werden hierzu beispielsweise über Walzen durch eine entsprechend temperiertes Wasserbad oder geschlossenem Behälter mit temperiertem Luftstrom hindurchgeführt.

Bevorzugte mono- oder biaxial orientierte Folien weisen nach der Thermofixierung einen Rückschrumpfwert von 5 bis 30 %, vorzugsweise 10 bis 20 % auf. Der Rückschrumpfwert wird üblicherweise durch einminütiges Kochen der Folie in kochendem Wasser bestimmt.

Die erfindungsgemäßen Folien zeichnen sich durch gute Wasser- und Sauerstoffpermeationseigenschaften aus. Gleichzeitig zeigen insbesondere biaxial orientierte Schlauchfolien eine verbesserte Kalibergenauigkeit. Deshalb eignen sich die erfindungsgemäßen Folien als Verpackungsmaterial für Lebensmittel und medizinische Geräte. Bei den Lebensmitteln sind als bevorzugte Verwendung Wursthüllen für Koch- und Brühwürste sowie für Käsewurst und vakuumverpackte Portionspackungen für Lebensmittel zu nennen.

Weiterhin eignen sich die erfindungsgemäßen Folien zur Herstellung von kaschierten oder coextrudierten Meterschichtfolien, welche mindestens eine Schicht aufgebaut aus den erfindungsgemäßen Folien enthalten.

Für Lebensmittelverpackungen werden häufig Mehrschichtaufbauten mit einer das Lebensmittel berührenden Polyolefinschicht, z.B. PE-Haftvermittler-PA oder PE-Haftvermittler-PA-Haftvermittler-PE, gewählt. Für Medizinanwendungen wird dabei wegen der Sterilisierbarkeit bei 120°C PE durch PP ersetzt. Für Wursthüllen Anwendungen wird dagegen wegen der besseren Bräthaftung eine das Lebensmittel berührende PA-Schicht gewählt, z.B. PA-Haftvermittler-PE-Haftvermittler-PA. Auch eine Konstruktion PA-Haftvermittler-PA ist vorteilhaft, wobei der auf Polyolefinen basierende Haftvermittler auch als $H_2O$-Sperrschicht dient. In einer Mehrschichtfolie für Wurstanwendungen ist die äußere, nicht in Lebensmittelkontakt stehende PA-Schicht bevorzugt dicker als die innere PA-Schicht, ferner ist bevorzugt nur diese äußere PA-Schicht aus den Komponenten A) bis C).

Als geeignete Polyolefine seien Homo- und Copolymere von $\alpha$-Olefinen wie Ethylen, Propylen oder Butylen genannt. Als Haftvermittler zwischen Polyamid- und Polyolefinschicht werden üblicherweise Polyolefine mit sauren Gruppen eingesetzt (z.B. Maleinsäureanhydrid, Acrylsäure oder Methacrylsäure).

Derartige Mehrschichtfolien können durch Coextrusion oder Kaschierung hergestellt werden. Bei der Coextrusion werden mindestens zwei Folien über einen Mehrschichtextrusionskopf aus dem Extruder ausgetragen und auf diese Weise verbunden.

Beispiele

Komponente A1: PA 6 mit Viskositätszahl (VZ) 195 ml/g (0,5 %ig in 96 % $H_2SO_4$ bei 25°C nach ISO 307), Ultramid® B 35 der BASF AG

Komponente A2: PA 6 mit VZ 225 ml/g (Ultramid® B 36 der BASF AG)

Komponente A3: PA 6 mit VZ 249 ml/g (Ultramid® B4 der BASF AG)

Komponente A4: Copolyamid PA 6/66 (85:15) mit VZ 246 ml/g, (Ultramid® C 4 der BASF AG)

Komponente A5: PA 6 mit VZ 151 ml/g (Ultramid® B 3 der BASF AG)

Komponente A6: statistisches Copolyamid 6I6T/DIDT aus 35 % Terephthalsäure/65 % Isophthalsäure als Säurekomponenten und 96 % 1,6-Diaminohexan/ 4 % Dicycan(4,4'-Diaminodicyclohexylmethan) als Aminkomponenten: VZ 120 ml/g (Selar® 3246 von DuPont de Nemours Inc., USA)

Komponente B1: Herstellung des Füllstoffkonzentrats (Batch)

30 % eines Glimmers mit mittlerer Teilchengröße (gemessen mit Malvern Particle Size Analyzer) von 5 µm ($d_{50}$-wert), mittlere Dicke 0,6 µm, mittlerer Durchmesser 24 µm, Länge/Durchmesser-Verhältnis L/D=40 (diese Werte durch Auszählen von ca. 50 Teilchen am Rasterelektronenmikroskop) mit 0,8 % Aminosilan oberflächenbehandelt, Aspanger® SFG 40 von Aspanger AG, -2 870 Aspang) wurden auf einem Zweiwellenextruder (ZSK 30 von Werner + Pfleiderer, 280°C, 200 U/min, 20 kg/h, Dosierung in die PA-Schmelze, scherungsarme Schneckenkombination zur Verringerung der Teilchenzerkleinerung) mit 70 % PA 6 (Ultramid B®3, Komp. A 5) konfektioniert, verstrangt, abgekühlt und granuliert.

Komponente B2: Herstellung wie B1, aber unter Verwendung von Aspanger® SFG 20, L/D = 20, mittlerer Durchmesser: ($d_{50}$) 12 µm.

Komponente B3: (Vergleich) Herstellung wie B1, aber unter Verwendung von calciniertem Kaolin (Polarite® 102 A, Engelhardt Co) Teilchengröße $d_{50}$ 4 µm, L/D:2

Komponente B4: (Vergleich) Herstellung wie B1, aber unter Verwendung von Calciumcarbonat (Teilchengröße $d_{50}$ 3,5 µm, L/D:1, Milicarb® von Omya GmbH, Köln)

Beispiel 1

96,5 % PA 6 (Komp. A1) wurden mit 3,3 % Komp. B1 (entspricht 1,0 % Feststoffgehalt) sowie 0,2 % feinteiligem Ethylen-bis-Stearylamid(EBS) versetzt und bei Raumtemperatur in einem Taumelmischer vermischt. Diese Mischung wurde bei 260°C Massetemperatur mit einem Schlauchfolien-Extruder (45 mm) der Plamex GmbH, D-Kelberg, zu einem Primärschlauch von 30 mm Durchmesser extrudiert, der mit einem Wasserbad von 9°C abgeschreckt wurde. Danach wurde der Schlauch in einem zweiten Wasserbad auf 70°C erwärmt und durch Druckluft auf 66 m (Aufblaufverhältnis 2,2) aufgeblasen. Gleichzeitig wurde der Schlauch durch die unterschiedlichen Laufgeschwindkeiten der Walzenpaare vor bzw. hinter der Aufblaszone auf das 2,5-fache in Längsrichtung gedehnt. Danach wurde der Schlauch mit einem Thermofixierofen mit erwärmter Luft als Medium auf 120°C erhitzt (thermofixiert), wobei die Verweilzeit 0,8 sec betrug, und anschließend aufgewickelt. Der verbleibende Rückschrumpfwert (sog. Kochschrumpf bei Eintauchen des Folienstreifens für 1 Min. in kochendes Wasser) betrug 22 % längs und 20 % quer, die Folienstärke nach Verstrekken betrug 38 µm.

Beispiele 2-19

Wie Beispiel 1, aber unter Verwendung der in Tab. 1 angegebenen Materialkombinationen

Beispiel 20

96,65 % PA 6 (Komp. A1) wurden mit 3,3 % Komp. B1 (entspricht 1,0 % Feststoffgehalt) sowie 0,05 % feinteiligem Ethylen-bisstearylamid (EBS) versetzt und bei Raumtemperatur in einem Taumelmischer vermischt. Diese Mischung wurde bei 260°C Massetemperatur mit einem Weber 30-Blasfolienextruder (Durchmesser 35 mm) zu Schlauchfolie von 50 µm Stärke verarbeitet (Meßwerte s. Tabelle 2).

Beispiele 21-31

Wie Beispiel 20, aber unter Verwendung in der Tabelle 2 angegebenen Materialkombinationen

Es wurden folgende Messungen durchgeführt:

1) Reißfestigkeit (in Längsrichtung) nach ISO 527

2) $O_2$-Permeabilität an Folienproben nach 24 h Konditionierung bei 100° rel.Feuchte, [ml 100 μm/$m^2$ bar d] nach ASTM-D 3985-81

3) Durchmesserkonstanz (als Maß für die Primärschlauchstabilität) durch Messung der Breite der zusammengelegten, orientierten Fertigfolie (=Schlauchumfang) über 5 m und Bestimmung der Differenz:

$$\Delta d = dmax - dmin \text{ [mm]}.$$

Tabelle 1.

biaxial orientierte Folie, Herstellung analog Beispiel 1

| Bsp | PA(A) | PA | Additiv(B) | Additiv | Reiß-fest | $O_2$ | $H_2O$ | Delta D | Verarbeitungsverhalten |
|---|---|---|---|---|---|---|---|---|---|
| | | | | | MPa | Perm. | Perm. | mm | |
| 1 | A1 | B35 | 3,3% B1 | SFG 20 | 220 | 35 | 9,5 | 0,41 | gute Primärblasenstabilität, 2h Laufzeit ohne Störungen |
| 2 | A2 | | 3,3% B1 | SFG 20 | 235 | 36 | 9,6 | 0,36 | dito |
| 3 | A3 | B4 | 3,3 B1 | SFG 20 | 235 | 36 | 9,7 | 0,44 | dito |
| 4 | A1 | B35 | 1,0% B1 | SFG 20 | 225 | 43 | 10,9 | 0,33 | dito |
| 5V | A1 | B35 | - | | 235 | 46 | 11,6 | 0,95 | leichte Primärblasenschwankungen, 2h Laufzeit ohne Störungen |
| 6 | A1 | B35 | 10% B1 | SFG 20 | 210 | 28 | 8,2 | 0,42 | gute Primärglasenstab, 2h Laufzeit ohne Störungen, Sekundärschlauch leicht trübe |
| 7 | A1 | B35 | 20% B1 | SFG 20 | 195 | 26 | 7,8 | 0,30 | dito, etwas trüber |
| 8 | A1 | B35 | 3,3% B2 | SFG 40 | 225 | 37 | 9,6 | 0,50 | wie 1 |
| 9 | A1 | B35 | 5% B2 | SFG 40 | 220 | 32 | 9,0 | 0,40 | wie 1 |
| 10V | A1 | B35 | 3,3% B3 | Kaolin | 230 | 47 | 11,2 | 1,00 | wie 5V |

| Bsp | PA(A) | PA | Additiv(B) | Additiv | Reiß-fest | $O_2$ | $H_2O$ | Delta D | Verarbeitungsverhalten |
|---|---|---|---|---|---|---|---|---|---|
| | | | | | MPa | Perm. | Perm. | mm | |
| 11V | A1 | B35 | 10% B3 | Kaolin | 219 | 44 | 11,0 | 1,20 | wie 5V |
| 12V | A1 | B35 | 3,3 B4 | $CaCO_3$ | 210 | 45 | 11,5 | 1,25 | wie 5 V |
| 13V | A1 | B35 | 10 B3 | $CaCO_3$ | 195 | 43 | 11,0 | 1,40 | deutliche Primärblasen-schwankungen |
| 14 | A5 | B3 | 3,3 B1 | SFG 20 | 190 | 35 | 9,2 | 0,55 | leichte Primärblasen-schwankungen |
| 14V | A5 | B3 | - | - | 195 | 45 | 11,0 | 1,80 | starke Primärblasen-schwankungen, Schlauch platzt jeweils nach ca. 5 min Laufzeit |
| 15 | 85%A1+15%A4 | B35/C35 | 3,3 B3 | SFG 20 | 222 | 37 | 9,7 | 0,35 | sehr gute primärblasen-stabilität, sehr hohe Transparenz |
| 16 | 85%A3/15% A4 | B4/C35 | 3,3 B3 | SFG 20 | 228 | 35 | 9,5 | 0,47 | dito |
| 17V | 85%A3/15% A4 | B4/C35 | - | - | 232 | 49 | 12,0 | 0,77 | gute Primärblasenstabili-tät |
| 18 | 85%A1/15% A6 | B35Selar | 3,3 B3 | SFG 20 | 191 | 28 | 8,5 | 0.44 | häufiges Schalauchplat-zen; bei 2.Wasserbad=80°C sehr gute Blasenstabil |
| 19V | 85%A1/15%A6 | B35Selar | - | - | 199 | 38 | 9,7 | 0,82 | häufiges Schlauchplatzen, bei 2.Wasserbad=80°C gute Blasenstab. |

Tabelle 2

unorientierte Schlauchfolie, Herstellung analog zu Beispiel 20

| Beispiel | Komponente | PA | Additiv(B) | Additiv | Reiß-fest | $O_2$-P | $H_2O$ Permeabilität |
|---|---|---|---|---|---|---|---|
| 20 | A1 | B35 | 3,3% B1 | SFG 20 | 78 | 40 | 12,0 |
| 21 | A2 | B36 | 3,3% B1 | SFG 20 | 80 | 40 | 11,5 |
| 22 | A3 | B4 | 3,3% B1 | SFG 20 | 80 | 39 | 11,7 |
| 23V | A1 | B35 | - | - | 82 | 51 | 14,0 |
| 24V | A3 | B4 | - | - | 82 | 53 | 14,5 |
| 23 | A1 | B35 | 20% B1 | SFG 20 | 74 | 29 | 9,0 |
| 24V | A1 | B35 | 3,3% B3 | Kaolin | 79 | 51 | 13,8 |
| 25V | A1 | B35 | 10% B3 | Kaolin | 78 | 50 | 14,2 |
| 26V | A1 | B35 | 3,3 B4 | $CaCO_3$ | 75 | 52 | 14,0 |
| 27V | A1 | B35 | 10% B4 | $CaCO_3$ | 65 | 52 | 14,5 |
| 28 | 85% A3/15% A4 | B4/C35 | 3,3 B3 | SFG 20 | 77 | 44 | 12,2 |
| 29V | 85% A3/15% A4 | B4/C35 | - | - | 78 | 54 | 15.2 |
| 30 | 85% A3/15% A6 | B35/Selar | 3,3 B3 | SFG 20 | 72 | 36 | 9,4 |
| 31V | 85% A1/15% A6 | B35/Selar | - | - | 73 | 41 | 10,2 |

**Patentansprüche**

1. Mono- oder biaxial orientierte Folien mit einem Rückschrumpfwert nach der Thermofixierung von 5 bis 30 %, bestehend aus

   A) bis zu 99 Gew.-% Polycaprolactam oder einem Copolyamid 6/66 oder deren Mischungen, welche bis zu 25 Gew.-% teilaromatische und/oder amorphe Polyamide enthalten können,

   B) 0,1 bis 2,5 Gew.-% eines mineralisches Füllstoffes mit einem Länge/Durchmesser (L/D)-Verhältnis von 1: 5 bis 1:100

   C) 0 bis 30 Gew.-% weiterer Zusatzstoffe und Verarbeitungshilfsmittel,

   wobei die Summe der Gewichtsprozente der Komponenten A) bis C) jeweils 100 % ergibt.

2. Folien nach Anspruch 1, in denen der mineralische Füllstoff B) aus einem blättchenförmiges Schichtsilikat besteht.

3. Folien nach den Ansprüchen 1 oder 2, in denen der mineralische Füllstoff B) Glimmer ist.

4. Folien nach den Ansprüchen 1 bis 3, wobei der mineralische Füllstoff B) einen mittleren Durchmesser von 0,1 bis 50 µm aufweist.

5. Folien nach den Ansprüchen 1 bis 4, in denen das Polyamid A) eine Viskositätszahl (VZ) von 150 bis 300 ml/g (gemäß ISO 307) aufweist.

6. Verfahren zur Herstellung von Folien gemäß den Ansprüchen 1 bis 5, dadurch gekennzeichnet, daß man aus den Komponenten A) bis C) mittels üblicher Breitschlitz- oder Blasfolienverfahren eine Folie herstellt.

7. Verfahren nach Anspruch 6, dadurch gekennzeichnet, daß die Folie gemäß den Ansprüchen 1 bis 5 nach der Verfestigung um mindestens das 1,5 fache in mindestens eine Richtung gereckt wird.

8. Verfahren nach den Ansprüchen 6 oder 7, dadurch gekennzeichnet, daß man die Folie nach der schmelzflüssigen Austragung aus dem Extruder in einer ersten Stufe auf Temperaturen von 0 bis 30°C abkühlt und anschließend in einer zweiten Stufe auf Temperaturen von 50 bis 95°C erwärmt.

9. Verfahren nach den Ansprüchen 6 bis 8, dadurch gekennzeichnet, daß die Folie gemäß den Ansprüchen 1 bis 6 nach der Reckung in heißer Luft oder Wasserdampf thermofixiert wird.

10. Verwendung der Folien gemäß den Ansprüchen 1 bis 5 sowie erhältlich gemäß den Verfahrensbedingungen der Ansprüche 6 bis 9 als Verpackungsmaterial für Lebensmittel und medizinische Geräte.

11. Verwendung der Folien nach Anspruch 10 als Wursthülle für Koch- und Brühwürste sowie für Käsewurst.

12. Verwendung der Folien gemäß den Ansprüchen 1 bis 5 sowie erhältlich gemäß den Verfahrensbedingungen gemäß den Ansprüchen 6 bis 9 zur Herstellung von coextrudierten oder kaschierten Mehrschichtfolien.

13. Coextrudierte oder kaschierte Mehrschichtfolien enthaltend mindestens eine Schicht aufgebaut aus Folien gemäß den Ansprüchen 1 bis 5.

**Claims**

1. A monoaxially or biaxially oriented film having a recovery after heat-setting of from 5 to 30%, composed of

   A) up to 99% by weight of polycaprolactam or a nylon-6/66 copolyamide or a mixture of these which can comprise up to 25% by weight of amorphous and/or partially aromatic polyamides,

   B) from 0.1 to 2.5% by weight of a mineral filler with a length/diameter (L/D) ratio of from 1:5 to 1:100 and

C) from 0 to 30% by weight of other additives and processing aids,

where the total of the percentages by weight of components A) to C) is always 100%.

**2.** A film as claimed in claim 1, in which the mineral filler B) is composed of a lamellar phyllosilicate.

**3.** A film as claimed in claim 1 or 2, in which the mineral filler B) is mica.

**4.** A film as claimed in any of claims 1 to 3, where the mineral filler B) has an average diameter of from 0.1 to 50 µm.

**5.** A film as claimed in any of claims 1 to 4, in which the polyamide A) has a viscosity number (VN) of from 150 to 300 ml/g (in accordance with ISO 307).

**6.** A process for producing a film as claimed in any of claims 1 to 5, which comprises using a conventional flat-film process or a conventional blown-film process to produce a film from components A) to C).

**7.** A process as claimed in claim 6, wherein the film as claimed in any of claims 1 to 5 is stretched in at least one direction after solidification by a factor of at least 1.5.

**8.** A process as claimed in claim 6 or 7, wherein the film, after its discharge as a melt from the extruder, is cooled in a first step to temperatures of from 0 to 30°C and then heated in a second step to temperatures of from 50 to 95°C.

**9.** A process as claimed in any of claims 6 to 8, wherein the film as claimed in any of claims 1 to 6, having been stretched, is heat-set in hot air or steam.

**10.** The use of the films as claimed in any of claims 1 to 5 or obtainable under the process conditions of any of claims 6 to 9 as a packaging material for food and drink and medical equipment.

**11.** The use of the films as claimed in claim 10 as sausage casings for cooked-meat and raw-emulsion sausages, and also for cheeses in sausage form.

**12.** The use of the films as claimed in any of claims 1 to 5 or obtainable under the process conditions as claimed in any of claims 6 to 9 for producing coextruded or laminated films having more than one layer.

**13.** A coextruded or laminated film having more than one layer and comprising at least one layer built up from films as claimed in any of claims 1 to 5.

**Revendications**

**1.** Feuilles à orientation mono- ou biaxiale avec une valeur de retrait de 5 à 30% après la fixation thermique, constituées

A) de jusqu'à 99% en poids de polycaprolactame ou d'un copolyamide 6/66 ou de leurs mélanges, lesquels peuvent contenir jusqu'à 25% en poids de polyamides partiellement aromatiques et/ou amorphes,
B) de 0,1 à 2,5% en poids d'une charge minérale ayant un rapport longueur/diamètre (L/D) de 1:5 à 1:100,
C) de 0 à 30% en poids d'autres additifs et d'agents de traitement,

la somme des pourcentages en poids des composants A) à C) s'élevant à chaque fois à 100%.

**2.** Feuilles selon la revendication 1, dans lesquelles la charge minérale B) est constituée d'un silicate stratifié en forme de petite feuille.

**3.** Feuilles selon les revendications 1 ou 2, dans lesquelles la charge minérale B) est le mica.

**4.** Feuilles selon les revendications 1 à 3, dans lesquelles la charge minérale B) présente un diamètre moyen de 0,1 à 50 µm.

**5.** Feuilles selon les revendications 1 à 4, dans lesquelles le polyamide A) présente un indice de viscosité (VZ) de 150 à 300 ml/g (selon ISO 307).

**6.** Procédé pour produire des feuilles selon les revendications 1 à 5, caractérisé en ce qu'on produit une feuille à partir des composants A) à C) au moyen des procédés courants à fente large ou à feuille soufflée.

**7.** Procédé selon la revendication 6, caractérisé en ce que la feuille selon les revendications 1 à 5 est étirée au moins d'un facteur 1,5 dans au moins une direction après la solidification.

**8.** Procédé selon les revendications 6 ou 7, caractérisé en ce que, dans une première étape, on refroidit la feuille à des températures de 0 à 30°C après expulsion à l'état fondu de l'extrudeuse et ensuite, dans une deuxième étape, on la réchauffe à des températures de 50 à 95°C.

**9.** Procédé selon les revendications 6 à 8, caractérisé en ce que la feuille selon les revendications 1 à 6 est fixée thermiquement après étirage dans de l'air chaud ou de la vapeur d'eau.

**10.** Utilisation des feuilles selon les revendications 1 à 5, ainsi que de celles pouvant être obtenues selon les conditions du procédé selon les revendications 6 à 9, en tant que matière d'emballage pour aliments et appareils médicaux.

**11.** Utilisation des feuilles selon la revendication 10, en tant que boyau de saucisse pour saucisses à cuire et saucisses à bouillir ainsi que pour saucisses au fromage.

**12.** Utilisation des feuilles selon les revendications 1 à 5, ainsi que de celles pouvant être obtenues selon les conditions du procédé selon les revendications 6 à 9, pour la production de feuilles multicouches co-extrudées ou stratifiées.

**13.** Feuilles multicouches co-extrudées ou stratifiées contenant au moins une couche formée à partir de feuilles selon les revendications 1 à 5.